# EUROPEAN PATENT APPLICATION

(11) **EP 1 125 983 A1**
(43) Date of publication of application: **22.08.2001**
(21) Application number: 00944364.9
(22) Date of filing: 10.07.2000
(51) Int. Cl.: C08L 67/02

(54) **POLYESTER RESIN COMPOSITION**

(30) Priority: 02.08.1999 JP 21889299
(71) Applicant: KANEKA CORPORATION, Osaka-shi, Osaka 530-8288 (JP)
(72) Inventor: KAWAI, Hideki, Kobe-shi, Hyogo 654-0123 (JP); MIYAMOTO, Masahiro, Kobe-shi, Hyogo 655-0872 (JP); ONUMA, Hisashi, Kobe-shi, Hyogo 655-0872 (JP)
(74) Representative: VOSSIUS & PARTNER
(86) International application number: JP0004582
(87) International publication number: WO0109244

(57) **Abstract**

A resin composition comprising (A) 1 to 30 % by weight of a core-shell graft copolymer having an average particle size of 0.1 to 0.5 µm and consisting of (i) 40 to 85 parts by weight of a core obtained by enlarging the particle size of a rubber having an average particle size of at most 0.1 µm and comprising a butadiene (co)polymer obtained by polymerization of 30 to 100 % by weight of butadiene, 70 to 0 % by weight of an aromatic vinyl copolymer or an aromatic (meth)acrylate, 10 to 0 % by weight of a vinyl monomer copolymerizable therewith and 5 to 0 % by weight of a cross-linking agent and (ii) 15 to 60 parts by weight of a shell layer obtained by a polymerization of 30 to 100 % by weight of an aromatic vinyl compound, 70 to 0 % by weight of an alkyl (meth)acrylate and 0 to 20 % by weight of a vinyl monomer copolymerizable therewith, and (B) 99 to 70 % by weight of an amorphous-polyethylene terephthalate resin.

## Description

### TECHNICAL FIELD

The present invention relates to a polyester resin composition. In particular, the present invention relates to a novel amorphous-polyethylene terephthalate resin composition which comprises a core-shell graft copolymer having a core comprising a specific kind of a rubber particle and which has an excellent transparency and high impact resistance.

### BACKGROUND ART

A polyethylene terephthalate resin is excellent in a transparency, mechanical property, and vapor barriers and widely used especially for package materials such as a bottle and a sheet. However, much higher impact resistance is demanded because of a recent large-scaling and complicated shape of a package.

Conventionally, an addition of a fibrous inorganic filler is attempted as a means for improvement on an impact resistance of a polyethylene terephthalate resin and the impact resistance is improved. Also, there is another method in which a rubber-like polymer and a rubber-containing polymer are added to a polyethylene terephthalate resin to improve the impact resistance. Particularly, it is known that an improvement on the impact resistance is exhibited by using a core-shell polymer consisting of rubber-like polymer particles surrounded with a rigid polymer.

When applied to an amorphous-polyethylene terephthalate resin, the above process improves the impact resistance by the addition of a fibrous inorganic filler, rubber-like polymer or rubber-containing polymer but remarkably damages a transparency, and cannot maintain easily the impact resistance and the transparency to be compatible. The object of the present invention is to provide an amorphous-polyethylene terephthalate resin composition by which a transparency and an impact resistance are compatible with each other.

### DISCLOSURE OF INVENTION

The present invention intends to provide a transparency and an impact resistance at the same time in a composition comprising a core-shell graft copolymer and an amorphous-polyethylene terephthalate resin by using an enlarged rubber particle by agglomeration as a core of the core-shell graft copolymer.

Namely, the present invention relates to a resin composition comprising:
(A) 1 to 30 % by weight of a core-shell graft copolymer having an average particle size of 0.1 to 0.5 µm and consisting of
   (i) 40 to 85 parts by weight of a core obtained by agglomeration of a rubber having an average particle size of at most 0.1 µm and comprising a butadiene (co)polymer obtained by a polymerization of 30 to 100 % by weight of butadiene, 70 to 0 % by weight of an aromatic vinyl compound or an aromatic (meth)acrylate, 10 to 0 % by weight of a vinyl monomer copolymerizable therewith and 5 to 0 % by weight of a cross-linking agent and
   (ii) 15 to 60 parts by weight of a shell layer obtained by a polymerization of 30 to 100 % by weight of an aromatic vinyl compound, 70 to 0 % by weight of an alkyl (meth)acrylate and 0 to 20 % by weight of a vinyl monomer copolymerizable therewith, and
(B) 99 to 70 % by weight of an amorphous-polyethylene terephthalate resin.

In the above, the core of the core-shell graft copolymer (A) is preferable to be obtained by agglomeration of the rubber particles comprising the butadiene (co)polymer by using a water-soluble electrolyte.

The core of the core-shell graft copolymer (A) is also preferable to be obtained by agglomeration of the rubber particles by using an acid group-containing latex comprising a copolymer of a (meth)acrylate and an unsaturated acid in the above.

### BEST MODE FOR CARRYING OUT THE INVENTION

The resin composition of the present invention comprises a core-shell graft copolymer (A) and an amorphous-polyethylene terephthalate resin (B).

The core-shell graft copolymer (A) consists of (i) a core obtained by agglomeration of the rubber particle comprising a butadiene (co)polymer and (ii) a shell layer or shell layers.

The butadiene (co)polymer used for the core can be prepared by a polymerization of 30 to 100 %, preferably 50 to 100 % by weight of butadiene, 70 to 0 %, preferably 50 to 0 % by weight of an aromatic vinyl compound or an aromatic (meth)acrylate, 10 to 0 %, preferably 5 to 0 % by weight of a vinyl monomer copolymerizable therewith and 5 to 0 %, preferably 3 to 0 % by weight of a cross-linking agent.

The above aromatic vinyl compound refers to a compound having one vinyl double bond and at least one benzene nucleus within a molecule. Examples thereof include styrene, 4-methoxystyrene, 4-ethoxystyrene, 4-propoxystyrene, 4-buthoxystyrene, 2-methylstyrene, 3-methylstyrene, 4-methylstyrene, 4-ethylstyrene, 2,5-dimethylstyrene, 2-chlorostyrene, 3-chlorostyrene, 4-chlorostyrene, 2,4-dichlorostyrene, 4-bromostyrene, 2,5-dichlorostyrene, α-methylstyrene and the like.

Among them, styrene and α-methylstyrene are preferable from a point that the refractive index of the rubber particle increases close to that of the amorphous-polyethylene terephthalate resin to improve a transparency of a molded article made of the resin composition and a point of a high copolymerization reactivity with butadiene.

The above aromatic (meth)acrylate refers to an ester of acrylic acid or methacrylic acid with an aromatic compound having a hydroxyl group. Examples thereof include phenyl methacrylate, phenyl acrylate and the like.

Among them, phenyl methacrylate is preferable from a point that the refractive index of the rubber particle increases close to that of the amorphous-polyethylene terephthalate resin to improve the transparency of the resin composition.

Examples of the above copolymerizable vinyl monomer include a (meth)acrylate other than the aromatic (meth)acrylate. '(Meth)acrylate' refers to a acrylate or a methacrylate.

Examples thereof include an ester of an alcohol having 1 to 8 carbon atoms with acrylic acid or methacrylic acid such as methyl methacrylate, ethyl methacrylate, butyl methacrylate, methyl acrylate, ethyl acrylate or butyl acrylate; a vinyl cyanide compound such as acrylonitrile, methacrylonitrile, vinylidene cyanate or 1,2-dicyanoethylene; a maleimide compound; acrylic acid; and methacrylic acid. Among them, ethyl acrylate and butyl acrylate are preferable from a point of a high polymerization reactivity and a point that Tg (glass transition temperature) of the rubber polymer thereof is not increased.

Examples of the above cross-linking agent include divinylbenzene, ethylene glycol dimethacrylate, polyethylene glycol dimethacrylate and the like.

In the above, too small amount of butadiene cannot improve the impact strength sufficiently.

The average particle size of the rubber comprising a butadiene (co)polymer is at most 0.1 µm, preferably 0.0001 to 0.09 µm. When larger than 0.1 µm, the particle size becomes difficult to be enlarged and seems to decrease the impact strength and the transparency of a final composition.

The rubber particle comprising the butadiene (co)polymer can be enlarged according to a freezing process, an enlarging process with an mechanical shear force, an acidic substance adding process and other processes. From viewpoints of a productivity and an equipment investment, preferable is a process of enlarging the particle size of the rubber by agglomeration by using a water-soluble electrolyte during a graft-polymerization for forming the shell layer on rubber particles or a process by using an acid-group containing latex comprising a copolymer of a (meth)acrylate and an unsaturated acid.

Examples of the above water-soluble electrolyte include a compound which dissociates into Na⁺, K⁺, Ca⁺⁺, Al⁺⁺⁺, NH₄⁺, H⁺ or the like, and Cl⁻, Br⁻, SO₄⁻⁻, S₂O₃⁻⁻, NO₃⁻, NO₂⁻, PO₄⁻⁻⁻, CO₃⁻⁻, OH⁻ or the like. The water-soluble electrolyte includes, for example, NaCl, KCl, Na₂SO₄, CaCl₂, AlCl₃ and the like.

The amount of the water-soluble electrolyte is preferably 0.5 to 5 parts by weight based on 100 parts by weight of the core-shell graft copolymer. Too large amount of the water-soluble electrolyte increases polymerization scale while too small amount makes it difficult to enlarge the particle size.

Examples of the above (meth)acrylate used for the above acid group-containing latex include a (meth)acrylate of a linear or side-chain alcohol having 1 to 12 carbon atoms. Also, examples of the unsaturated acid include acrylic acid, methacrylic acid, itaconic acid, itaconic acid monoester, maleic acid monoester, crotonic acid and the like.

The agglomerated rubber particle comprising the butadiene copolymer gives an enlarged rubber particle maintaining an original rubber particle shape to some extent and a plurality of them. This enlarged rubber particle by agglomeration increases an improvement of the impact resistance compared with the original particle.

The shell layer can be obtained by a polymerization of 30 to 100 %, preferably 50 to 100 % by weight of an aromatic vinyl compound, 70 to 0 %, preferably 50 to 0 % by weight of an alkyl (meth)acrylate and 0 to 20 %, preferably 0 to 10 % by weight of a copolymerizable vinyl monomer.

The shell layer can be formed by, for example, a graft polymerization onto the rubber particle.

The above aromatic vinyl compound forming the shell layer refers to a compound having one vinyl double bond and at least one benzene nucleus within a molecule. Examples thereof include styrene, 4-methoxystyrene, 4-ethoxystyrene, 4-propoxystyrene, 4-buthoxystyrene, 2-methylstyrene, 3-methylstyrene, 4-methylstyrene, 4-ethylstyrene, 2,5-dimethylstyrene, 2-chlorostyrene, 3-chlorostyrene, 4-chlorostyrene, 2,4-dichlorostyrene, 4-bromostyrene, 2,5-dichlorostyrene, α-methylstyrene and the like. Among them, styrene and α-methylstyrene are preferable from a point that the refractive index of the graft copolymer increases close to that of the amorphous-polyethylene terephthalate resin to improve a transparency of the article made of the composition and a point of a high polymerization reactivity.

The above alkyl (meth)acrylate forming the shell layer refers to an ester of acrylic acid or methacrylic acid with an alcohol. Examples thereof include an ester of an alcohol having 1 to 8 carbon atoms with (meth)acrylic acid such as methyl methacrylate, ethyl methacrylate, butyl methacrylate, methyl acrylate, ethyl acrylate or butyl acrylate. Among them, methyl methacrylate, butyl acrylate, and ethyl acrylate are preferable from a viewpoint that compatibility with the amorphous-polyethylene terephthalate resin is improved.

Examples of the above copolymerizable vinyl monomer forming the shell layer include acrylonitrile, methacrylonitrile, vinylidene cyanate, 1,2-dicyanoethylene, a maleimide compound, (meth)acrylic acid and the like.

Too small amount of the above aromatic vinyl compound forming the shell layer makes the refractive index of the graft copolymer distant from that of the amorphous-polyethylene terephthalate resin and decreases the transparency of the article made of the resin composition.

Too large amount of the above alkyl (meth)acrylate monomer forming the shell layer makes the refractive index of the graft copolymer distant from that of the amorphous-polyethylene terephthalate resin and decreases the transparency of the article made of the resin composition.

The above core-shell graft copolymer (A) comprises 40 to 85 parts, preferably 50 to 80 parts by weight of the core and 60 to 15 parts, preferably 50 to 20 parts by weight of the shell layer based on 100 parts by weight of the core and the shell layer in total.

A high ratio of the core and a low ratio of the shell layer make the shell layer incapable of coating the core sufficiently and decreases improvement on the impact resistance. A low ratio of the core and a high ratio of the shell layer decrease the amount of the rubber and cannot sufficiently improve the impact resistance.

The average particle size of the above core-shell graft copolymer is 0.1 to 0.5 µm, preferably 0.1 to 0.3 µm. When it is smaller than 0.1 µm, the improvement of the impact resistance remains small. When it is larger than 0.5 µm, the transparency is largely decreased.

The above core-shell graft copolymer (A) can be obtained by an emulsion polymerization, a suspension polymerization, a solution polymerization and the like. The emulsion polymerization is preferable in that the particle size of the rubber particles can be easily adjusted. A procedure and an order of the emulsion polymerization are not particularly limited.

The procedure of adding the monomer mixture for forming the shell layer is not particularly limited. Useful are a continuous one-stage addition, a two-stage addition and the like.

The amorphous-polyethylene terephthalate resin (B), which is to be improved according to the present invention, means a resin having no substantial crystallinity or a crystallinity low enough to the degree that does not affect the transparency.

Examples thereof include a homopolymer, a copolymer or a mixture thereof which are obtained by a condensation polymerization of a diol compound comprising at least 50 % by mole, particularly at least 70 % by mole of ethylene glycol with a dicarboxylic acid compound comprising at least 50 % by mole, particularly 70 % by mole of terephthalic acid or an alkyl ester thereof.

Examples of the copolymer include those obtained by a copolymerization with the other dicarboxylic acid compound such as isophthalic acid, a halogenated terephthalic acid or the like within a range of at most 50 % by mole of the total dicarboxylic acid compound, by a copolymerization with a polyalkylene glycol such as diethylene glycol or the like within a range of at most 50 % by mole of the total diol compound, or by a copolymerization with an alkylene glycol having 3 to 12 carbon atoms such as 1,4-cyclohexane dimethanol or the like.

The resin composition of the present invention comprises 1 to 30 % by weight, preferably 3 to 20 % by weight of the core-shell graft copolymer (A) and 99 to 70 % by weight, preferably 97 to 80 % by weight of the amorphous-polyethylene terephthalate resin (B). When the amount of the core-shell graft copolymer (A) is less than 1 % by weight and the amount of the amorphous polyethylene terephthalate resin (B) is more than 99 % by weight, a sufficient impact resistance cannot be obtained. When the amount of the core-shell graft copolymer (A) is more than 30 % by weight and the amount of the amorphous-polyethylene terephthalate resin (B) is less than 70 % by weight, the transparency of the molded article is remarkably decreased.

As a process for preparing the resin composition of the present invention, there can be used, for example, a process in which the core-shell graft copolymer (A) and the amorphous-polyethylene terephthalate resin (B) are prepared separately to be mixed together by using a Henshell mixer, a tumbler, a Banbury mixer or the like and molded with a single screw extruder, a twin screw extruder or the like.

The resin composition of the present invention can comprise an anti-oxidant, a heat stabilizer, an improving agent for light resistance, an ultraviolet ray absorber, a lubricant, a plasticizer, a mold releasing agent, an anti-static agent, a sliding improving agent, a colorant and the like.

The present invention is explained in detail below by means of examples.

### [Rubber particle]

A polymerization vessel with a stirrer is charged with 200 parts by weight of deionized water, 1.5 parts by weight of sodium oleate, 0.002 part by weight of ferrous sulfate, 0.005 part by weight of disodium ethylenediaminetetraacetate, 0.2 part by weight of formaldehyde sodium sulfoxylate, 0.2 part by weight of tripotassium phosphate, 60 parts by weight of butadiene, 40 parts by weight of styrene, 1.0 part by weight of divinylbenzene and 0.1 part by weight of diisopropylbenzene hydroperoxide. The mixture is polymerized for 15 hours at 50°C to obtain a rubber latex (a) having an average particle size of 0.08 µm at a polymerization conversion ratio of 99 %.

### [Core-shell graft copolymer]

### EXAMPLE 1

Mixed were 180 parts by weight of the above rubber latex (a) (solid content: 60 parts by weight), 200 parts by weight of deionized water, 0.002 part by weight of ferrous sulfate, 0.004 part by weight of disodium ethylenediaminetetraacetate, 0.1 part by weight of formaldehyde sodium sulfoxylate and 2.3 parts by weight of potassium chloride (an agglomeration agent). A liquid mixture of 28 parts by weight of styrene, 12 parts by weight of methyl methacrylate and 0.2 part by weight of cumene hydroperoxide was continuously added thereto at 70°C to obtain a core-shell graft copolymer latex having an average particle size of 0.15 µm.

The obtained graft copolymer latex was coagulated with hydrochloric acid, heat-treated, washed, dehydrated and dried to obtain a graft copolymer powder.

### EXAMPLE 2

A vessel was charged with 200 parts by weight of deionized water, 0.2 part by weight of sodium dioctylsulfosuccinate, 0.4 part by weight of formaldehyde sodium sulfoxylate, 0.01 part by weight of disodium ethylenediaminetetraacetate and 0.0025 part by weight of ferrous sulfate. The temperature was elevated to 65°C in a nitrogen stream with stirring. Continuously dropped was a monomer mixture of 90 parts by weight of methyl methacrylate, 10 parts by weight of methacrylic acid, 0.2 part by weight of tertiarydodecylmercaptan and 0.1 part by weight of cumene hydroperoxide. After the dropping, an acid group-containing latex was obtained with stirring for an hour.

To 100 parts by weight of the rubber latex (a), 4 parts by weight of the above acid group-containing latex were added at 25°C, and then the temperature was elevated to 60°C in 40 min with stirring. The rubber particle was completely agglomerated with stirring further continued for 30 min at the temperature to obtain a rubber latex (b) having an average particle size of 0.13 µm.

Mixed were 180 parts by weight of the above rubber latex (b) (solid content: 60 parts by weight), 200 parts by weight of deionized water, 0.002 part by weight of ferrous sulfate, 0.004 part by weight of disodium ethylenediaminetetraacetate and 0.1 part by weight of formaldehyde sodium sulfoxylate. A liquid mixture of 28 parts by weight of styrene, 12 parts by weight of methyl methacrylate and 0.2 part by weight of cumene hydroperoxide was continuously added thereto at 70°C to obtain a core-shell graft copolymer latex having an average particle size of 0.15 µm.

The obtained graft copolymer latex was coagulated with hydrochloric acid, heat-treated, washed, dehydrated and dried to obtain a graft copolymer powder.

### EXAMPLE 3

A graft copolymer was obtained in the same manner as in Example 2 except that the amount of the acid group-containing latex was 2.5 parts by weight and the agglomerated rubber had an average particle size of 0.27 µm.

### COMPARATIVE EXAMPLE 1

A polymerization vessel with a stirrer was charged with 45 parts by weight of the above rubber latex (a) (solid content: 15 parts by weight), 200 parts by weight of deionized water, 0.2 parts by weight of sodium oleate, 0.0017 part by weight of ferrous sulfate, 0.0045 part by weight of disodium ethylenediaminetetraacetate, 0.17 part by weight of formaldehyde sodium sulfoxylate, 0.17 part by weight of tripotassium phosphate, 51 parts by weight of butadiene, 34 parts by weight of styrene, 0.85 part by weight of divinylbenzene and 0.085 part by weight of diisopropylbenzene hydroperoxide.

A Polymerization was performed at 50°C, followed by addition of 0.3 part by weight of sodium oleate each of after 6 hours and after 12 hours of the beginning of the polymerization. After 18 hours, 0.475 part by weight of sodium oleate was added. A rubber latex (d) having an average particle size of 0.14 µm was obtained at a polymerization conversion ratio of 99 % in 24 hours.

Mixed were 180 parts by weight of the above rubber latex (d) (solid content: 60 parts by weight), 200 parts by weight of deionized water, 0.002 part by weight of ferrous sulfate, 0.004 part by weight of disodium ethylenediaminetetraacetate and 0.1 part by weight of formaldehyde sodium sulfoxylate. A liquid mixture of 28 parts by weight of styrene, 12 parts by weight of methyl methacrylate and 0.2 part by weight of cumene hydroperoxide was continuously added thereto at 70°C to obtain a core-shell graft copolymer latex having an average particle size of 0.15 µm.

The obtained graft copolymer latex comprising a rubber having non-agglomerated particle was treated in the same manner as in Example 1 to obtain a graft copolymer powder.

### COMPARATIVE EXAMPLE 2

A graft copolymer was prepared in the same manner as in Example 1 except that potassium chloride was not used.

### COMPARATIVE EXAMPLE 3

A core-shell graft copolymer having an average particle size of 1.0 µm was prepared in the same manner as in Example 2 except that the amount of the acid group-containing latex was 1.5 parts by weight and the agglomerated rubber particle had an average size of 0.9 µm.

### [Resin composition]

Each of the above graft copolymers was added in an amount of 20 parts by weight based on 80 parts by weight of an amorphous polyethylene terephthalate resin (Estar 6763 available from Eastman Chemical Co., Ltd.). It was pre-mixed, molten and kneaded at a predetermined temperature of 220°C by using a 40 mm single screw extruder made by Tabata Kikai Co., Ltd. to obtain a pellet.

The obtained pellet was dried at 70°C for at least five hours, and then a 1/8 inch Izod test specimen and a 100 mm x 100 mm x 3 mm plaque test specimen were prepared by using 160 t injection molding machine at a cylinder temperature of 240°C and a mold temperature of 40°C.

Each property of a particle size, a light permeability and an Izod impact strength is shown in Table 1. Each property was evaluated according to the following method.

### Izod impact strength

An Izod impact strength was measured at room temperature (23°C) according to JIS K-7110. The test specimen was a 1/8 inch injection specimen with notch.

### Transparency

A transparency was measured according to ASTM D-1003. The test specimen was an injection molded article having a thickness of 3 mm.

### Average particle size

An Average particle size of a core-shell graft copolymer of each of the latex was measured by using a particle size analyzer UPA made by Microtrack Co., Ltd.

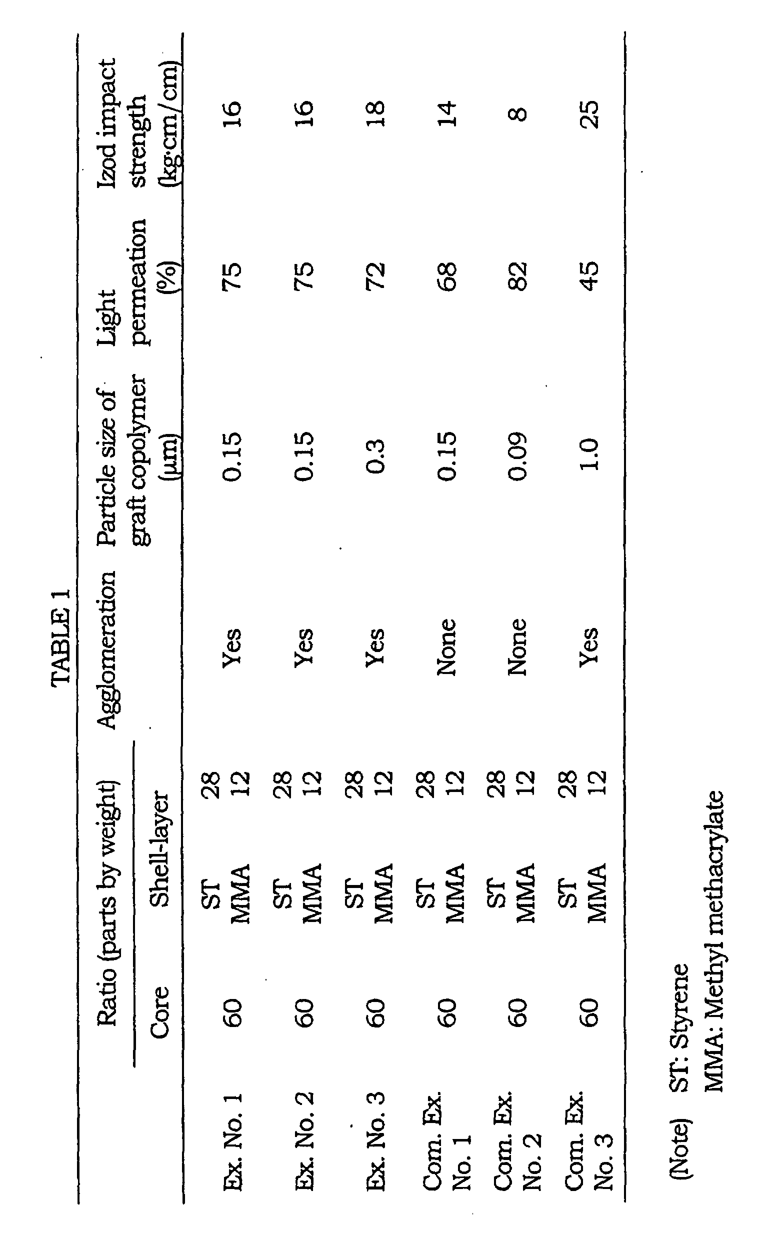

### INDUSTRIAL APPLICABILITY

The present invention provides a resin composition having an improved impact resistance without severely damaged optical characteristics of an amorphous-polyethylene terephthalate resin and is of an industrial usefulness.

## Claims

1. A resin composition comprising:
(A) 1 to 30 % by weight of a core-shell graft copolymer having an average particle size of 0.1 to 0.5 µm and consisting of
(i) 40 to 85 parts by weight of a core obtained by enlarging the particle size of a rubber having an average particle size of at most 0.1 µm and comprising a butadiene (co)polymer obtained by a polymerization of 30 to 100 % by weight of butadiene, 70 to 0 % by weight of an aromatic vinyl compound or an aromatic (meth)acrylate, 10 to 0 % by weight of a vinyl monomer copolymerizable therewith and 5 to 0 % by weight of a cross-linking agent and
(ii) 15 to 60 parts by weight of a shell layer obtained by a polymerization of 30 to 100 % by weight of an aromatic vinyl compound, 70 to 0 % by weight of an alkyl (meth)acrylate and 0 to 20 % by weight of a vinyl monomer copolymerizable therewith, and
(B) 99 to 70 % by weight of an amorphous-polyethylene terephthalate resin.

2. A resin composition according to Claim 1, wherein the core of the core-shell graft copolymer (A) is obtained by agglomeration and enlarging of the particle size of the rubber comprising a butadiene (co)polymer by using a water-soluble electrolyte.

3. A resin composition according to Claim 1, wherein the core of the core-shell graft copolymer (A) is obtained by enlarging the particle size of the rubber comprising the butadiene (co)polymer by using an acid group-containing latex comprising a copolymer of a (meth)acrylate and an unsaturated acid.
